# EUROPEAN PATENT APPLICATION

(11) **EP 4 054 086 A1**
(43) Date of publication of application: **07.09.2022**
(21) Application number: 19951175.9
(22) Date of filing: 01.11.2019
(51) Int. Cl.: H04B 7/0456, H04W 16/28

(54) **TERMINAL AND WIRELESS COMMUNICATION METHOD**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/043130
(87) International publication number: WO 2021/084753

(57) **Abstract**

A terminal according to one aspect of the present disclosure includes a control section that, in a case where transform precoding is configured enabled, mode 1 is configured, and a partial-and-non-coherent codebook subset is configured, determines, as a codebook subset of maximum rank 1 using four antenna ports, a codebook subset including a transmitted precoding matrix indicator (TPMI) with a value of 12 or more, on the basis of a specific higher layer parameter, and a transmitting section that transmits an uplink shared channel by using a precoder included in the codebook subset including a TPMI with a value of 12 or more. According to one aspect of the present disclosure, it is possible to control full power transmission appropriately.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

In NR, the capability of a user terminal (or a terminal or user equipment (UE)) related to codebook-based full power UL transmission using a plurality of power amplifiers (PAs) has been studied. Discussions for NR so far have proposed UE capabilities 1 to 3, as follows:
- UE capability 1: PAs that can output the maximum rated power (full rated PAs) are supported (included) on each transmission chain (Tx chain)
- UE capability 2: no Tx chain supports full rated PA
- UE capability 3: subset (a part) of Tx chains supports full rated PA

Further, configuring a UE supporting UE capability 2 or 3 to operate in at least one of two modes (modes 1 and 2) for full power transmission has been considered. In Rel-16 NR, a UE reporting UE capability information indicating support for operating in mode 1 or support operating in mode 2 has been considered.

For mode 1, using a new codebook subset including a transmitted precoding matrix indicator (TPMI) that supports full power transmission has been considered. However, it is not clear whether this new codebook subset only is assumed to be used for a UE in mode 1 (this term also can refer to a UE configured to operate in mode 1). In addition, the configuration of the new codebook subset has not yet been considered.

The absence of explicit standards on the configuration of the new codebook subset, a precoding field, or the like makes a mode 1 UE unable to perform full power transmission properly. The inability to perform full power transmission may cause, for example, a decrease in coverage, which leads to difficulty in an increase in communication throughput.

Thus, the present disclosure intends to provide a terminal and radio communication method capable of controlling full power transmission appropriately.

### Solution to Problem

A terminal according to one aspect of the present disclosure includes a control section that, in a case where transform precoding is configured enabled, mode 1 is configured, and a partial-and-non-coherent codebook subset is configured, determines, as a codebook subset of maximum rank 1 using four antenna ports, a codebook subset including a transmitted precoding matrix indicator (TPMI) with a value of 12 or more, on the basis of a specific higher layer parameter, and a transmitting section that transmits an uplink shared channel by using a precoder included in the codebook subset including a TPMI with a value of 12 or more.

### Advantageous Effects of Invention

According to one aspect of the present disclosure, it is possible to control full power transmission appropriately.

### Brief Description of Drawings

Fig. 1 is a diagram showing an example of association between a precoder type and a TPMI index.
Fig. 2 is a diagram illustrating the exemplary configuration of UEs assuming the full power transmission-related UE capabilities 1 to 3.
Fig. 3 corresponds to a table showing a precoding matrix W for transmission in a single-layer (rank 1) of CP-OFDM using four antenna ports.
Fig. 4 is a diagram illustrating an example of TPMI notification to a partial coherent UE that performs a single layer transmission using four antenna ports.
Figs. 5A and 5B are diagrams illustrating an example of information related to a full power subset that is configured for the mode 1 UE.
Fig. 6 is a diagram illustrating an example of TPMI notification to a partial coherent UE that performs a single layer transmission using four antenna ports.
Fig. 7 is a diagram illustrating an example of a schematic configuration of a radio communication system according to an embodiment.
Fig. 8 is a diagram illustrating an example of a configuration of a base station according to an embodiment.
Fig. 9 is a diagram illustrating an example of a configuration of a user terminal according to an embodiment.
Fig. 10 is a diagram illustrating an example of a hardware configuration of the base station and the user terminal according to an embodiment.

### Description of Embodiments

### (PUSCH Precoder)

In the NR, it is considered that the UE will support at least one of codebook (CB)-based transmission and non-codebook (NCB)-based transmission.

For example, it is considered that the UE uses at least a measurement reference signal (Sounding Reference Signal (SRS)) Resource Index (SRI) to determine a precoder (precoding matrix) for at least one of CB-based and NCB-based uplink shared channel (Physical Uplink Shared Channel (PUSCH)) transmissions.

In the case of the CB-based transmission, the UE may determine the precoder for PUSCH transmission on the basis of the SRI, a Transmitted Rank Indicator (TRI), and a Transmitted Precoding Matrix Indicator (TPMI), or the like. For the NCB-based transmission, the UE may determine a precoder for PUSCH transmission based on the SRI.

SRI, TRI, TPMI, or the like may be notified to the UE using downlink control information (DCI). The SRI may be specified by an SRS Resource Indicator field (SRI field) of the DCI, or may be specified by a parameter "srs-ResourceIndicator" included in an RRC information element "ConfiguredGrantConfig" of a configured grant PUSCH (configured grant PUSCH).

The TRI and the TPMI may be specified by precoding information of the DCI and a layer number field ("Precoding information and number of layers" field). Moreover, the term "field of precoding information and number of layers" is hereinafter simply referred to as a "precoding field", for the sake of simplicity.

Moreover, the maximum number of layers (maximum rank) for UL transmission can be configured in the UE by an RRC parameter "maxRank".

The UE may report UE capability information regarding the precoder type, and the precoder type based on the UE capability information may be configured by higher layer signaling from the base station. The UE capability information may be precoder type information (may be represented by the RRC parameter "pusch-TransCoherence") used by the UE in PUSCH transmission.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), or the like.

The UE may determine the precoder used for PUSCH transmission based on the precoder type information (which may be represented by the RRC parameter "codebookSubset") contained in the PUSCH configuration information ("PUSCH-Config" information element of RRC signaling) notified by higher layer signaling. The UE may be configured with a subset of the codebook specified by the TPMI by the codebookSubset.

The precoder type may be designated by any of full coherent, fully coherent, coherent, partial coherent, non-coherent, or a combination of at least two of them (for example, which may be represented by parameters such as "fullyAndPartialAndNonCoherent", "partialAndNonCoherent").

Full coherent may mean that the all antenna ports used for transmission are synchronized (may be expressed as phase-matched, the same precoder applied, etc.). Partial coherent may mean that some port of the antenna ports used for transmission are synchronized, but that some port and other ports cannot be synchronized. Non-coherent may mean that each antenna port used for transmission cannot be synchronized.

A UE that supports a fully coherent precoder type may be assumed to support partial coherent and non-coherent precoder types. A UE that supports a partial coherent precoder type may be assumed to support a non-coherent precoder type.

The precoder type may be read as coherency, PUSCH transmission coherence, coherent type, coherence type, codebook type, codebook subset, codebook subset type, and the like.

The UE may determine the precoding matrix corresponding to a TPMI index obtained from the DCI (for example, DCI format 0_1, the same applies hereinafter) that schedules UL transmission from multiple precoders (may be referred to as precoding matrices, codebooks, or the like) for CB-based transmission.

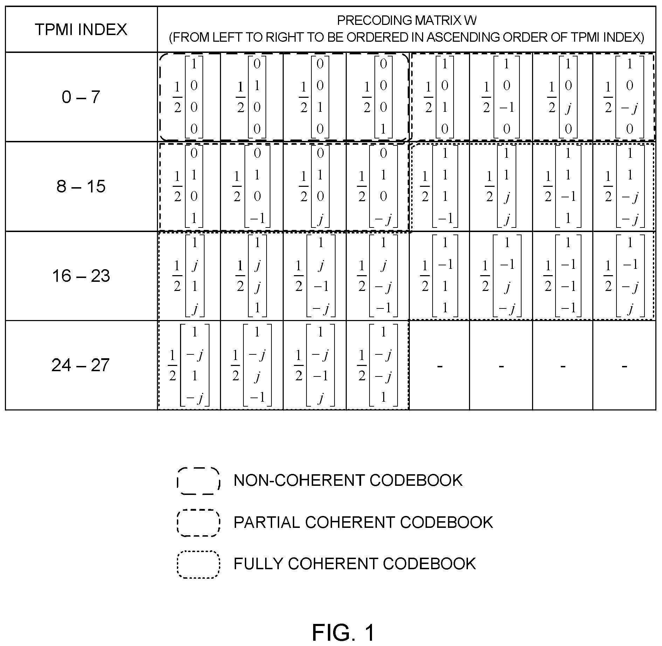

Fig. 1 is a diagram showing an example of association between a precoder type and a TPMI index. Fig. 1 is a table showing a precoding matrix W for transmission in a single layer (rank 1) using four antenna ports in discrete Fourier transform spread OFDM (DFT-s-OFDM) (with transform precoding enabled).

In Fig. 1, if the precoder type (codebookSubset) is fullyAndPartialAndNonCoherent, the UE is notified with a TPMI of 0 to 27 for a single layer transmission. In addition, if the precoder type is partialAndNonCoherent, the UE is configured with a TPMI of 0 to 11 for a single layer transmission. If the precoder type is nonCoherent, the UE is configured with a TPMI of 0 to 3 for a single layer transmission.

Fig. 1 is a table defined in the current Rel. 15 NR. In this table, if a fully coherent transmission power corresponding to index #12 to #27 is set to 1 (= (1/2)² * 4), a partial coherent transmit power corresponding to index #4 to #11 is set to 1/2 (= (1/2)² * 2), and a non-coherent transmit power corresponding to index #0 to #3 is set to 1/4 (= (1/2)² * 1).

In other words, according to the current Rel. 15 NR specifications, if a part of codebooks are used when a UE performs codebook-based transmission using a plurality of ports, the transmit power may be reduced (full power transmission cannot be performed) as compared with a case of a single port.

Moreover, as illustrated in Fig. 1, the precoding matrix in which only one of the components in respective columns is non-zero can be referred to as a non-coherent codebook. The precoding matrix in which the given number (but not all) of components in respective columns is non-zero can be referred to as a partial coherent codebook. The precoding matrix in which all components in respective columns are non-zeros can be referred to as a fully coherent codebook.

The non-coherent codebook and the partial coherent codebook can also be referred to as an antenna selection precoder. The fully coherent codebook can also be referred to as a non-antenna selection precoder.

Moreover, in the present disclosure, the partial coherent codebook can be a codebook (i.e., codebooks of TPMIs = 4 to 11 for single-layer transmission using four antenna ports) obtained by excluding codebooks corresponding to TPMIs specifying a UE configured with a non-coherent codebook subset (e.g., RRC parameter "codebookSubset" = "nonCoherent") among codebooks (precoding matrix) corresponding to TPMIs specifying a UE configured with a partial coherent codebook subset (e.g., RRC parameter "codebookSubset" = "partialAndNonCoherent") by DCI for codebook-based transmission.

Moreover, in the present disclosure, the fully coherent codebook can be a codebook (i.e., codebooks of TPMIs = 12 to 27 for single-layer transmission using four antenna ports) obtained by excluding codebooks corresponding to TPMIs specifying a UE configured with a partial coherent codebook subset (e.g., RRC parameter "codebookSubset" = "partialAndNonCoherent") among codebooks (precoding matrix) corresponding to TPMIs specifying a UE configured with a fully coherent codebook subset (e.g., RRC parameter "codebookSubset" = "fullyAndPartialAndNonCoherent") by DCI for codebook-based transmission.

### (UE capability for full power transmission)

Even when the codebook is used, it is preferable to perform full power UL transmission appropriately. Therefore, in NR, the UE capability related to codebook-based full power UL transmission using a plurality of power amplifiers (PAs) has been studied. Discussions for NR so far have proposed UE capabilities 1 to 3, as follows:
- UE capability 1: PAs that can output the maximum rated power (full rated PAs) are supported (included) on each transmission chain (Tx chain)
- UE capability 2: no Tx chain supports full rated PA
- UE capability 3: subset (a part) of Tx chains supports full rated PA

Moreover, a UE having at least one of UE capabilities 1 to 3 can mean that the UE supports UL full power transmission. The UE can report capability information indicating that it supports the UL full power transmission capability to a network (e.g., a base station), in addition to or apart from UE capabilities 1 to 3. The configuring of a UE supporting full power transmission can be made from the network.

The UE capability 1, 2, or 3 can be replaced with a full power transmission-related UE capability 1, 2, or 3, a full power transmission type 1, 2, or 3, an electric power allocation type 1, 2, or 3, and so on. The terms of type, mode, capability, or the like herein can be used interchangeably. In addition, such numerals of 1, 2, or 3 herein can be used interchangeably as an optional set of numerals or characters, such as A, B, or C.

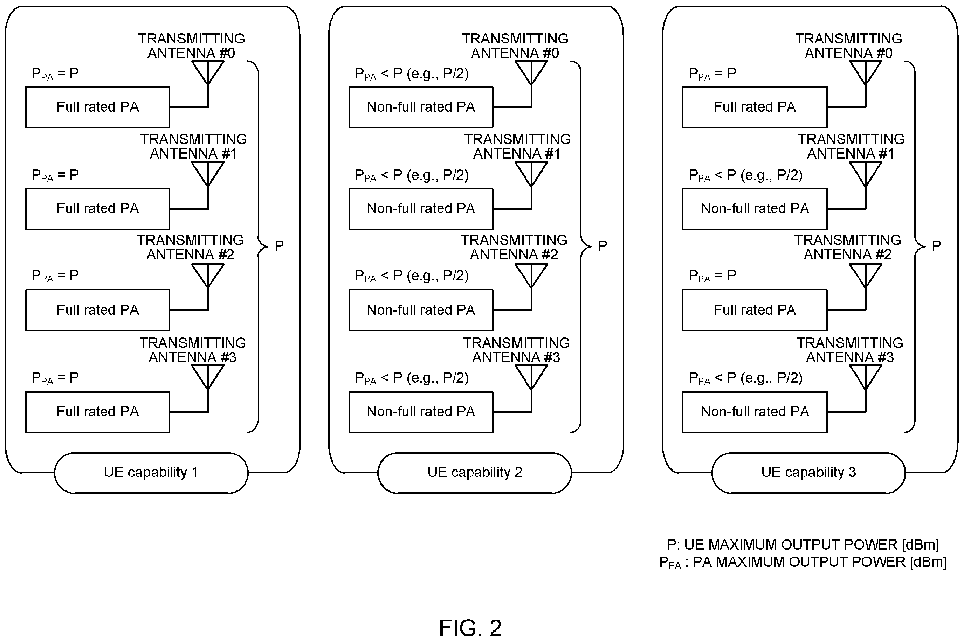

Fig. 2 is a diagram illustrating the exemplary configuration of UEs assuming the full power transmission-related UE capabilities 1 to 3. Fig. 2 illustrates in a simplified form only a PA and a transmitting antenna port (it can be replaced with a transmitting antenna) of the configuration of a UE. Moreover, this exemplary illustration shows that the number of PAs and the number of transmitting antenna ports are four, but not limited to this number.

Moreover, P indicates the UE maximum output power [dBm], and P_{PA} indicates the PA maximum output power [dBm]. Furthermore, P can be, for example, 23 dBm for a UE with power class 3 and 26 dBm for a UE with power class 2. Although P_{PA} ≤ P is herein assumed, an embodiment of the present disclosure is applicable to a case of P_{PA} > P.

The configuration of UE capability 1 is expected to be costly to implement, but its full power transmission is possible using one or more optional antenna ports. The configuration of UE capability 2 includes only non-full rated PA and is expected to be implementable at a lower cost, but fails to perform the full power transmission using only one antenna port, so the phase, amplitude, or the like of the signal input to each PA is necessary to be controlled.

The configuration of UE capability 3 has a mixed form between the configuration of UE capability 1 and the configuration of UE capability 2. Antenna ports capable of full-power transmission (transmitting antennas #0 and #2 in this example) and antenna ports not capable of full-power transmission (transmitting antennas #1 and #3 in this example) are mixed.

Moreover, the index, number, or the like of antenna ports capable of full power transmission of UE capability 3 is not limited to this illustrated example. In addition, in this example, it is assumed that P_{PA} = P / 2 of the non-full rated PA, but the value of P_{PA} is not limited to this exemplary value.

Meanwhile, configuring a UE supporting UE capability 2 or 3 to operate in at least one of two modes (modes 1 and 2) for full power transmission has been considered. The modes 1 and 2 may be referred to as operation modes 1 and 2, respectively.

The mode 1 can herein be a mode in which a UE is configured so that one or more SRS resources included in one SRS resource set whose usage is "codebook" have the same number of SRS ports (e.g., also can be referred to as the first full power transmission mode). The UE operating in mode 1 can perform full power transmission using the entire antenna ports.

The UE operating in mode 1 can be configured by the network in such a way as to use a subset of TPMIs used to combine ports within one layer to achieve full power transmission. A new codebook subset can be introduced only for a rank value, which includes a TPMI precoder corresponding to "fullyAndPartialAndNonCoherent" defined in Rel-15 NR but is not available for full power transmission.

On the other hand, the mode 2 can herein be a mode in which a UE is configured so that one or more SRS resources included in one SRS resource set whose usage is "codebook" have the different number of SRS ports (e.g., also can be referred to as the second full power transmission mode). The UE operating in mode 2 can perform full power transmission using not the entire antenna ports but a part of antenna ports.

The UE operating in mode 2 can transmit PUSCH and SRS in the same way regardless of the availability of antenna virtualization. The UE operating in mode 2 can be notified of a set of TPMIs to achieve full power transmission because of supporting more SRS resources than one port. In the case of mode 2, two or three SRS resources can be configured for each single SRS resource set (up to two for Rel-15 NR).

Mode 1 has the advantage that the required SRI field size can be smaller than that of mode 2 (full power transmission is possible with one SRS resource).

Mode 2 has the advantage that single port transmission and multiport transmission are dynamically switchable by DCI compared to mode 1. In addition, full power transmission is achievable with some antenna ports, and so, for example, it is possible to perform full power transmission using only an antenna provided with a full rated PA or using only a coherent antenna.

Moreover, the UE can determine a mode to be used for PUSCH transmission on the basis of higher layer signaling (e.g., RRC signaling), physical layer signaling (e.g., DCI), or a combination thereof. In other words, the UE can be configured or indicated with a mode for PUSCH transmission.

In Rel-16 NR, a UE reporting UE capability information indicating support for operating in mode 1, reporting UE capability information indicating support for operating in mode 2, or reporting UE capability information regarding a TPMI set (also can be referred to as TPMI group) capable of full power transmission in relation to mode 2 has been considered.

As described above, for mode 1, using a new codebook subset including a TPMI that supports full power transmission has been considered. However, it is not clear whether this new codebook subset only is assumed to be used for a UE in mode 1 (this term also can refer to a UE configured to operate in mode 1). In addition, the configuration of the new codebook subset has not yet been considered.

For example, for a single layer transmission of partial coherent UE using four antenna ports, it is agreed that the new codebook subset includes a matrix of TPMI = {12, 13, 14, 15} when transform precoding is configured disabled (in other words, when using Cyclic Prefix OFDM (CP-OFDM)), and includes a matrix of TPMI = {12, 13, 14, 15} when transform precoding is enabled (in other words, when using DFT-s-OFDM).

However, for the single layer transmission of partial coherent UE using four antenna ports, it is not yet under consideration as to how a new codebook subset handles a matrix of TPMI = {16, 17, 18, 19} when transform precoding is enabled.

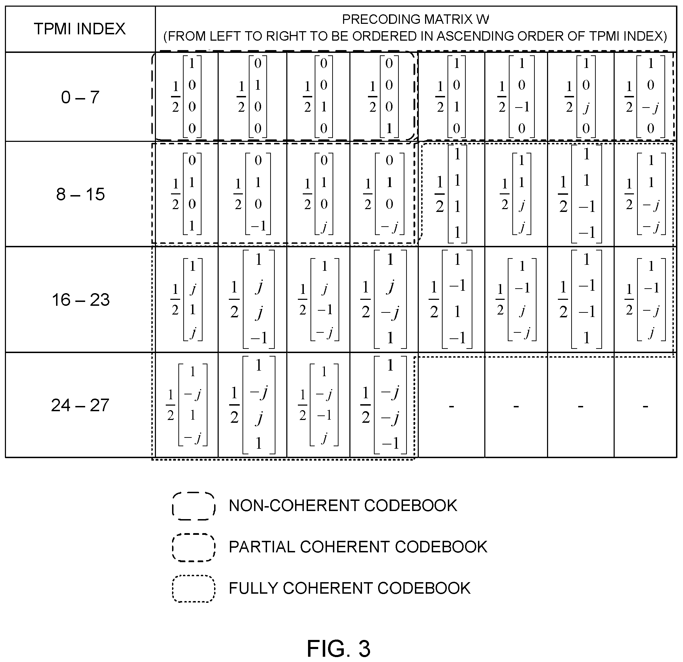

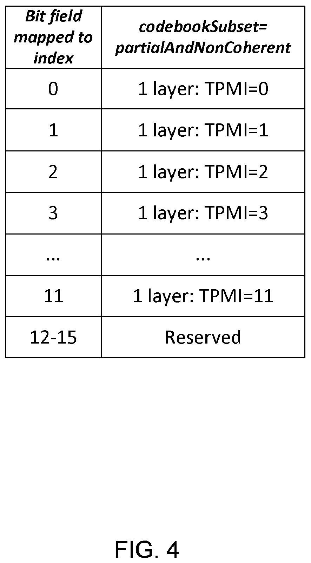

Matters described above will be explained with reference to Figs. 3 and 4. Note that "matrix of TPMI = X" and "TPMI = X" in the present disclosure may be replaced with each other.

Fig. 3 corresponds to a table showing the precoding matrix W for transmission in a single-layer (rank 1) of CP-OFDM using four antenna ports. Compared with the table for DFT-s-OFDM in Fig. 1, it can be understood that the partial coherent codebook and the fully coherent codebook are partially different.

As shown in Fig. 3, for CP-OFDM, TPMI = {16, 17, 18, 19} corresponds to TPMI = {12, 13, 14, 15} * [1, j, 1, j] respectively, TPMI = {20, 21, 22, 23} corresponds to TPMI = {12, 13, 14, 15} * [1, -1, 1, -1] respectively, and TPMI = {24, 25, 26, 27} corresponds to TPMI = {12, 13, 14, 15} * [1, -j, 1, -j] respectively.

That is, for the partial coherent UE using CP-OFDM, TPMI = {16, 17, 18, 19} is obtained by applying phase rotation processing of [1, -j, 1, -j] to TPMI = {12, 13, 14, 15}. Therefore, it is not necessary to notify TPMI = {16, 17, 18, 19}.

On the other hand, as shown in Fig. 1, for DFT-s-OFDM, in the precoding matrix specified in Rel.15 NR, TPMI = {16, 17, 18, 19} corresponds to TPMI = {12, 13, 14, 15} * [1, j, 1, -j] respectively, TPMI = {20, 21, 22, 23} corresponds to TPMI = {12, 13, 14, 15} * [1, -1, 1, -1] respectively, and TPMI = {24, 25, 26, 27} corresponds to TPMI = {12, 13, 14, 15} * [1, -j, 1, j] respectively.

That is, for the partial coherent UE using DFT-s-OFDM, TPMI = {16, 17, 18, 19} seems to be obtained by applying phase rotation processing of [1, j, 1, -j] to TPMI = {12, 13, 14, 15}. However, it is not preferable to apply different phases (+180 degrees) to coherent ports {1, 3} from the viewpoint of coherence guarantee.

In addition, since TPMI = {12, 13, 14, 15, 16, 17, 18, 19} corresponds to TPMI = {20, 21, 22, 23, 24, 25, 26, 27} * [1, -1, 1, -1], it is desirable that TPMI = {16, 17, 18, 19} can also be notified to a partial coherent UE using DFT-s-OFDM.

Fig. 4 is a diagram illustrating an example of TPMI notification to a partial coherent UE that performs a single layer transmission using a four antenna ports. Fig. 4 illustrates a relationship (table) in Rel. 15 NR between the DCI precoding field (shown in the figure as "bit field mapped to index", the same applies in the following similar figures) and the TPMI corresponding to Fig. 1. Moreover, "codebookSubset = partialAndNonCoherent" represents that the table is referenced by the partial coherent UE.

In Rel. 15 NR, regardless of whether transform precoding is set to be disabled or enabled, a UE that performs single layer transmission using four antenna ports determines a TPMI of a precoding matrix to be applied for transmission based on values in the precoding field and the table in Fig. 4. In Fig 4, precoding field values = 0 -11 correspond to TPMI = 0 -11, respectively, and precoding field values = 12 -15 correspond to "Reserved", which means that it is planned to be defined in the future.

Since there are only four "Reserved" in Fig. 4, if it is desired to use more than four TPMIs in addition to the TPMI (0 -11) used by the partial coherent UE of Rel. 15, how the TPMI should be controlled has not yet been studied.

The absence of explicit standards on the configuration of the new codebook subset, a precoding field, or the like makes a mode 1 UE unable to perform full power transmission properly. The inability to perform full power transmission may cause, for example, a decrease in coverage, which leads to difficulty in an increase in communication throughput.

Thus, the inventors have conceived a control method of appropriately performing full power transmission. According to one aspect of the present disclosure, it is possible to perform uplink multi-input multi-output (UL MIMO) transmission with full power, maintaining a cell coverage similar to a single antenna. In addition, according to UL MIMO, spatial diversity gain can be obtained, which can be expected throughput improvement. Furthermore, even a UE that is not provided with a full rated PA can appropriately perform full power transmission.

Hereinafter, embodiments according to the present disclosure will be described in detail with reference to the drawings. A radio communication method according to each embodiment may be applied independently, or may be applied in combination with others.

Moreover, the terms "antenna" and "antenna port" in embodiments below can be used interchangeably.

The term "full power" herein can be also replaced with "power boosting", "maximum power", "extended power", "power higher than that of Rel-15 UE", and the like.

Further, herein, the phrase "having UE capability X" (X = 1, 2, or 3) can be also replaced with reporting UE capability X, performing full power transmission using the configuration of UE capability X, and the like.

The phrase "having coherent capability" (e.g., fully coherent, partial coherent, and non-coherent) can be also replaced herein with reporting the capability, being configured with coherent, and so on.

Further, a non-coherent UE, a partial coherent UE, and a fully coherent UE can be also replaced with a UE having capability relating to non-coherent, a UE having capability relating to partial coherent, and a UE having capability relating to fully coherent, respectively.

Further, the non-coherent UE, the partial coherent UE, and the fully coherent UE can refer to UEs in which codebook subsets of "nonCoherent", "partialAndNonCoherent", and "fullyAndPartialAndNonCoherent" are configured in the higher layer, respectively. Moreover, herein, "codebook subset" and "codebook" can be used interchangeably.

The non-coherent UE, the partial coherent UE, and the fully coherent UE can refer to UEs capable of transmitting using the non-coherent codebook, the partial coherent codebook, and the fully coherent codebook, respectively.

In the following respective embodiments, mode 1 or 2 is described as having a usage related to the SRS resource set of the codebook, but is not limited to this example. In the respective embodiments, modes 1 or 2 can be also replaced with, for example, mode 1 or 2 for SRS resource sets whose usage is non-codebook.

Further, herein, a new codebook subset including a TPMI that supports mode 1 full power transmission can be referred to as a full power subset. A codebook subset including only a TPMI that does not support the mode-1 full power transmission (e.g., a Rel-15 NR codebook subset) can be referred to as a non-full power subset.

In addition, the following "full power subset" indicates a codebook subset of a maximum rank 1 (single layer) that is used by a mode 1 and partial coherent UE that performs transmission using four antenna ports, but is not limited thereto. The "rank 1" and the "maximum rank 1" of the present disclosure may be replaced with each other.

The UE in the following embodiments corresponds to the mode 1 and partial coherent UE (in other words, the UE that is configured with mode 1 and partial coherent). Therefore, "UE" of the present disclosure may be replaced with "mode 1 and partial coherent UE".

### (Radio Communication Method)

### <First Embodiment>

In the first embodiment, it can be assumed that the mode 1 and partial coherent UE with transform precoding enabled which performs transmission using four antenna ports may be explicitly configured or activated with a new codebook subset (full power subset) of rank 1 (single layer) by higher layer signaling (for example, RRC signaling, MAC CE, and the like).

The mode 1 UE may be configured with at least one of the following CB types 1 to 4 as a full power subset:
- CB type 1: TPMI = {0, 1, 2,..., 11, 12, 13, 14, 15}
- CB type 2: TPMI = {0, 1, 2,..., 11, 16, 17, 18, 19}
- CB type 3: TPMI = {0, 2, 4, 6, 8, 10, 12, 13, 14, 15, 16, 17, 18, 19}
- CB type 4: TPMI = {0, 1, 2,..., 11, 12, 13, 14, 15, 16, 17, 18, 19}

CB type 1 corresponds to a codebook subset obtained by adding TPMI = {0,..., 11} that is of a partial coherent codebook to TPMI = {12,..., 15} that is not supported by a partial coherent UE in Rel. 15 NR, among a codebook subset of rank 1 using four antenna ports in the existing Rel. 15 NR. The size of the DCI precoding field for signaling the CB type 1 TPMI may be the same (4 bits) as that of Rel. 15 NR.

CB type 2 corresponds to a codebook subset obtained by adding TPMI = {0,..., 11} that is of a partial coherent codebook to TPMI = {16,..., 19} that is not supported by a partial coherent UE in Rel. 15 NR, among a codebook subset of rank 1 using four antenna ports in the existing Rel. 15 NR. The size of the DCI precoding field for signaling the CB type 2 TPMI may be the same (4 bits) as that of Rel. 15 NR.

CB type 3 corresponds to a codebook subset obtained by adding any n (for example, 6) TPMIs of TPMI = {0,..., 11} that is of a partial coherent codebook to TPMI = {12,..., 19} that is not supported by a partial coherent UE in Rel. 15 NR, among a codebook subset of rank 1 using four antenna ports in the existing Rel. 15 NR. The size of the DCI precoding field for signaling the CB type 3 TPMI may be the same (4 bits) as that of Rel. 15 NR.

CB type 4 corresponds to a codebook subset obtained by adding TPMI = {0,..., 11} that is of a partial coherent codebook to TPMI = {12,..., 19} that is not supported by a partial coherent UE in Rel. 15 NR, among a codebook subset of rank 1 using four antenna ports in the existing Rel. 15 NR. The size of the DCI precoding field for signaling the CB type 4 TPMI may be larger (for example, 5 bits) than that of Rel. 15 NR.

In the CB type 3, the (left or replaced) TPMI selected from TPMI = {0,..., 11} may be a TPMI of a specific value (for example, even number, odd number) or a TPMI satisfying a given condition (for example, n from the largest and n from the smallest). The replaced TPMI may be predefined in the specification or may be configured in the UE by higher layer signaling.

The TPMI included in the CB type 3 may correspond to a TPMI corresponding to a precoding matrix that the UE can suitably cover transmission in a direction of the base station.

Further, the CB type may be replaced with a new codebook type, a codebook type 1, a codebook set, a type, or the like. Hereinafter, the CB type is simply referred to as a type.

It should be noted that the types 1, 2, and 3 may be referred to as a subset that is small in size (for example, the number of included TPMIs is less than or equal to a given number (for example, 16)), a subset in which a relatively small quantity of precoding matrices are available, or the like. The type 4 may be referred to as a subset that is large in size (for example, the number of included TPMIs is larger than a given number (for example, 16)), a subset in which a relatively large quantity of precoding matrices are available, or the like.

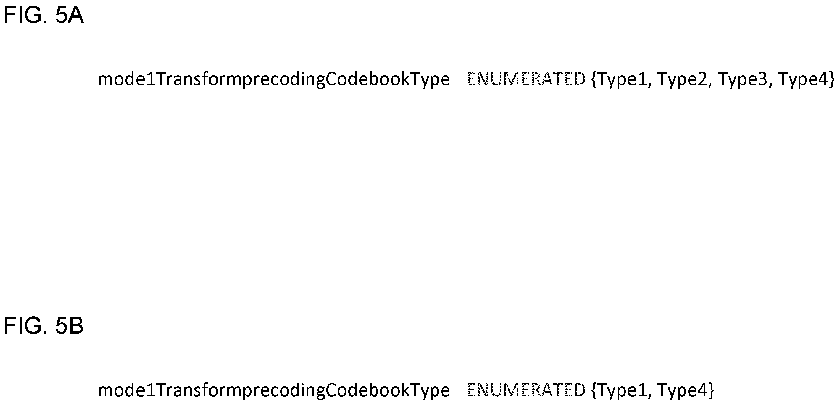

Figs. 5A and 5B are diagrams illustrating an example of information related to a full power subset that is configured for the mode 1 UE. The present example is described using Abstract Syntax Notation One (ASN.1) notation (note that this is merely an example and is not a complete description). Moreover, the RRC parameter name is not limited to the names shown.

The information related to the full power subset ("mode1TransformprecodingCodebookType" in the drawings) may be referred to as information indicating a type of a codebook when transform precoding is enabled in mode 1.

The information related to the full power subset may be configured such that all of the types described above can be configured in the UE, as illustrated in Fig. 5A. In this case, the UE may assume that at least one of types 1 to 4 is configured as a full power subset.

The information related to the full power subset may be configured such that some of the types described above (two of types 1 and 4 in the case of Fig. 5B) can be configured in the UE, as illustrated in Fig. 5B. In this case, the UE may assume that any three or less of types 1 to 4 are configured as a full power subset.

Note that the type that can be configured as the information related to the full power subset may necessarily include a given type. For example, the type that can be configured as the information related to the full power subset may necessarily include type 4, and the UE may assume that the information regarding the full power subset can configure types 1 and 4, or types 2 and 4, or types 3 and 4. The type that can be configured in the information related to the full power subset may be configured by higher layer signaling, or may be defined in advance in the specification.

If one or multiple types are configured as the information related to the full power subset, the UE may activate any one of the one or the multiple types indicated by the particular MAC CE. According to this configuration, the UE can change the full power subset faster than the reconfiguration using the RRC signaling.

Note that when any full power subset is not activated, the UE may use a subset of Rel. 15 NR (Fig. 1 or 3) or a default full power subset for single-layer DFT-s-OFDM transmission using four antenna ports. The default full power subset may be defined in the specification in advance or may be configured by higher layer signaling.

The UE may report information related to the supporting full power subset (for example, any of types 1 to 4) to the network as the UE capability information. In this case, the UE may perform DFT-s-OFDM transmission using four antenna ports by using the reported full power subset even if the information related to the full power subset is not configured from the network. For example, the mode 1 UE reporting only type 1 may perform single-layer DFT-s-OFDM transmission using four antenna ports by using a subset of Type 1.

In the first embodiment, the UE may determine the number of bits of the precoding field of the DCI on the basis of the configuration or activated full power subset. Therefore, for example, the network may perform control to change the full power subset to adjust the number of bits of the precoding field on the basis of a channel state with the UE, a location of the UE, and the like.

For example, the network may configure a subset (for example, type 4) in which a large number of precoding matrices are available, so that wide UL coverage can be ensured for UEs at cell ends.

The mode 1 UE can determine a precoding matrix corresponding to the TPMI indicated by the DCI precoding field on the basis of the configured full power subset. The mode 1 UE can assume that the TPMI corresponding to the DCI precoding field value = X is the X^{th} TPMI of the subset that is configured (the same applies throughout the embodiments of the present disclosure).

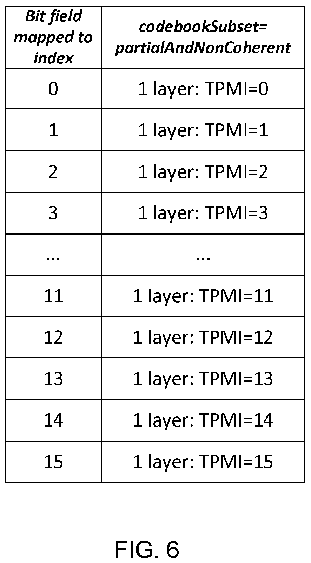

The UE may assume that the tables for the TPMIs corresponding to the precoding fields are different when the transform precoding is enabled and disabled. Fig. 6 is a diagram illustrating an example of TPMI notification to a partial coherent UE that performs a single layer transmission using four antenna ports.

The table of Fig. 6 is a table in which the value = 12 -15 of the precoding field in the table of Fig. 3 is changed so that each value corresponds to TPMI = 12 -15. Moreover, the correlation between the field value and TPMI is not limited to these examples.

The mode 1 UE may determine the precoding matrix based on the table in Fig. 3 when the transform precoding is disabled, or may determine the precoding matrix based on the table in Fig. 6 when the transform precoding is enabled.

The UE may assume that the number of bits of the precoding fields are different when the transform precoding is enabled and disabled. For example, the UE configured with the full power subset of type 4 may assume that the number of bits of the precoding field is four (see the table in Fig. 3) when the transform precoding is disabled, or may assume that the number of bits of the precoding field is five when the transform precoding is enabled.

As described above, according to the first embodiment, when the mode 1 is configured in the UE, the specification of the TPMI for the non-antenna selection precoder (may be referred to as a non-antenna selection TPMI, a non-antenna selection TPMI precoder, or the like.) (for single-layer transmission using four antenna ports, TPMI = 4 -27) can be appropriately grasped, and the full power transmission can be performed. Further, by appropriately controlling the size of full power subset used by the UE, it is possible to reduce the size of the DCI precoding field if unneeded, improving the communication throughput.

### <Second Embodiment>

In the second embodiment, a mode 1 and partial coherent UE with transform precoding enabled which perform transmission using four antenna ports may determine a new codebook subset (full power subset) of rank 1 (single layer) on the basis of at least one of the following higher layer parameters (in other words, it may be assumed that the full power subset is implicitly configured by at least one of the following):
- the number of resource blocks for PUSCH;
- a subcarrier spacing (SCS) for PUSCH;
- a frequency range used for PUSCH transmission;
- a search space (for example, search space type) of the PDCCH for detecting DCI for scheduling PUSCH; and
- CORESET (for example, the aggregation level corresponding to the CORESET) of the PDCCH that detects DCI for scheduling PUSCH.

The full power subset of the second embodiment may be determined from the subset of types 1 to 4 described above with respect to the first embodiment.

For example, the mode 1 and partial coherent UE may assume that the full power subset is a particular subset (for example, any of subset that is small in size (types 1 to 3)) if the number of resource blocks for PUSCH is configured (or indicated) to be equal to or greater than a given threshold X, otherwise the full power subset may be assumed to be the other subset (for example, any of subset that is large in size (for example, type 4)).

Here, the threshold value X may be configured in the specification in advance or may be configured by higher layer signaling. X may be, for example, 50 resource blocks.

The mode 1 and partial coherent UE may assume that the full power subset is a particular subset (for example, a subset that is large in size) if the SCS for PUSCH falls under a value Y, and may assume the other subset (for example, a subset that is small in size) otherwise.

Here, the value Y may be configured in the specification in advance or may be configured by higher layer signaling. Y may be, for example, 60 kHz, 120 kHz, or the like.

The mode 1 and partial coherent UE may assume that the full power subset is a particular subset (for example, a subset that is large in size) if the frequency range used for PUSCH transmission corresponds to a particular frequency range (for example, FR4), and may assume that the full power subset is the other subset (for example, a subset that is small in size) otherwise.

The mode 1 and partial coherent UE may assume that the full power subset is a specific subset (for example, a subset that is small in size) when the search space type of the PDCCH detecting the DCI for scheduling PUSCH is a specific type (for example, common (in other words, a common search space set)), and may assume that the full power subset is the other subset (for example, a subset that is large in size) when it is not a specific type (for example, UE specific) (in other words, the UE specific search space set).

The mode 1 and partial coherent UE may assume that when the search space type of the PDCCH detecting the DCI for scheduling PUSCH is a specific type (for example, common or UE-specific), and is a specific CORESET (for example, CORESET corresponding to a search space whose aggregation level is Z (here, Z = 4) or more.), the full power subset is a specific subset (for example, a subset that is small in size) to ensure UL coverage; otherwise, the UL coverage is insignificant, and the full power subset is the other subset (for example, a subset that is large in size).

As described above, according to the second embodiment, even if there is no additional RRC signaling, the mode 1 and the partial coherent UE that perform the single-layer transmission using four antenna ports can appropriately grasp the specification of the TPMI for the non-antenna selection precoder and perform the full power transmission.

### <Third Embodiment>

In the third embodiment, a mode 1 and partial coherent UE with transform precoding enabled which performs transmission using four antenna ports may determine a new codebook subset (full power subset) of rank 1 (single layer) based on the number of SRS resources included in one or more SRS resource sets of which usage is a codebook (in other words, it may be assumed that different full power subsets are used on the basis of the number of SRS resources).

In the third embodiment, the full power subset of rank 1 used by the mode 1 and partial coherent UE with transform precoding enabled which performs transmission using four antenna ports may be determined such that the total bits of the precoding field and the SRI field of the DCI is constant regardless of the number of SRS resources (for example, the number of SRS resources is the same in a case where the number of SRS resources is 1 and in a case where the number of SRS resources is 2).

For example, the mode 1 and partial coherent UE may assume that the full power subset is a specific subset (for example, a subset that is large in size) when only one resource is configured as a SRS resource included in one or more SRS resource sets of which usage is a codebook. When the number of SRS resources is 1, the SRI field is not included (0 bit) in the DCI for scheduling PUSCH (for example, DCI format 0_1), therefore, when the specific subset is the type 4 subset, the size of the precoding field is 5 bits, and the total size of the SRI field and the precoding field is 5 bits.

The mode 1 and partial coherent UE may assume that the full power subset is a subset other than a specific subset (for example, a subset that is small in size) when two resources are configured as SRS resources included in one or more SRS resource sets of which usage is a codebook. When the number of SRS resources is 2, the SRI field of 1 bit is included in the DCI (for example, DCI format 0_1) for scheduling PUSCH, therefore, when the specific subset is a subset of any one of types 1 to 3, the size of the precoding field is 4 bits, and the total size of the SRI field and the precoding field is 5 bits.

As described above, according to the third embodiment, the total bits of the precoding field and the SRI field of the DCI for the mode 1 and partial coherent UE with transform precoding enabled which performs transmission using four antenna ports is constant regardless of the number of SRS resources described above, and therefore it is possible to suppress an increase in the number of times of decoding the PDCCH of the UE.

### <Others>

In the above-described respective embodiments, the description is given of UL transmission using the antenna port assuming PUSCH, but the full power transmission of at least one of other signals and channels can be controlled in addition to or in place of PUSCH.

In other words, the antenna port in the above-described respective embodiments can be at least one antenna port of PUSCH (and demodulation reference signal (DMRS) and phase tracking reference signal (PTRS) for PUSCH), an uplink shared channel (physical uplink control channel (PUCCH)), a random access channel (physical random access channel (PRACH)), an SRS, or the like. The full power transmission can be applied to at least one of these signals and channels.

### (Radio Communication System)

Hereinafter, a configuration of a radio communication system according to an embodiment of the present disclosure will be described. In this radio communication system, communication is performed using one or a combination of the radio communication methods according to the embodiments of the present disclosure.

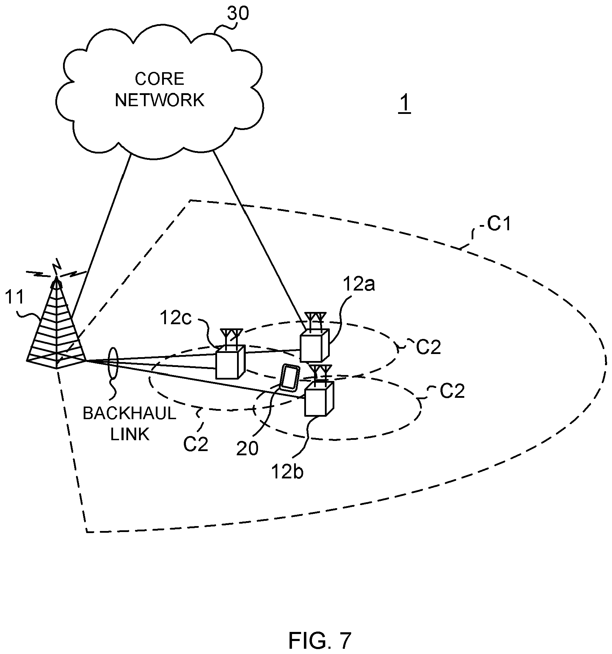

Fig. 7 is a diagram illustrating an example of a schematic configuration of the radio communication system according to an embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI for scheduling the PDSCH may be referred to as DL assignment, DL DCI, or the like, and DCI for scheduling the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a given search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a "user terminal-specific reference signal (UE-specific reference signal)".

### (Base Station)

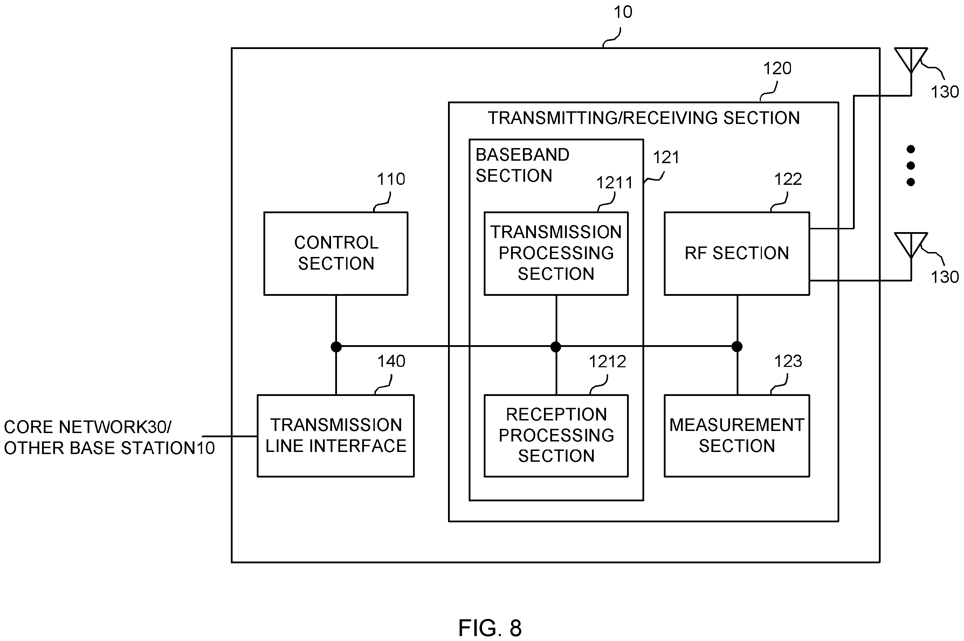

Fig. 8 is a diagram illustrating an example of a configuration of the base station according to an embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be configured by a controller, a control circuit, or the like, which is described on the basis of common recognition in the technical field to which the present disclosure relates.

The control section 110 may control signal generation, scheduling (for example, resource assignment or mapping), and the like. The control section 110 may control transmission/reception, measurement, and the like using the transmitting/receiving section 120, the transmission/reception antenna 130, and the transmission line interface 140. The control section 110 may generate data to be forwarded as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be configured by a transmitter/receiver, an RF circuit, a base band circuit, a filter, a phase shifter, a measurement circuit, a transmission/reception circuit, and the like, which are described on the basis of common recognition in the technical field to which the present disclosure relates.

The transmitting/receiving section 120 may be configured as an integrated transmitting/receiving section, or may be constituted by a transmitting section and a receiving section. The transmitting section may be configured by the transmission processing section 1211 and the RF section 122. The receiving section may be configured by the reception processing section 1212, the RF section 122, and the measurement section 123.

The transmission/reception antenna 130 can be configured by an antenna described on the basis of common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

On the other hand, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correcting decoding), MAC layer processing, RLC layer processing, or PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be configured by at least one of the transmitting/receiving section 120, the transmission/reception antenna 130, and the transmission line interface 140.

Note that the transmitting/receiving section 120 may transmit a specific higher layer parameter (for example, a codebook type, information regarding the number of resource blocks of PUSCH, SRS resource configuration, or the like) for determining a codebook subset including a transmitted precoding matrix indicator (TPMI) with a value of 12 or more, as a codebook subset of maximum rank 1 using four antenna ports, to the user terminal 20 that configured transform precoding enabled, configured mode 1, and configured a partial-and-non-coherent codebook subset.

### (User terminal)

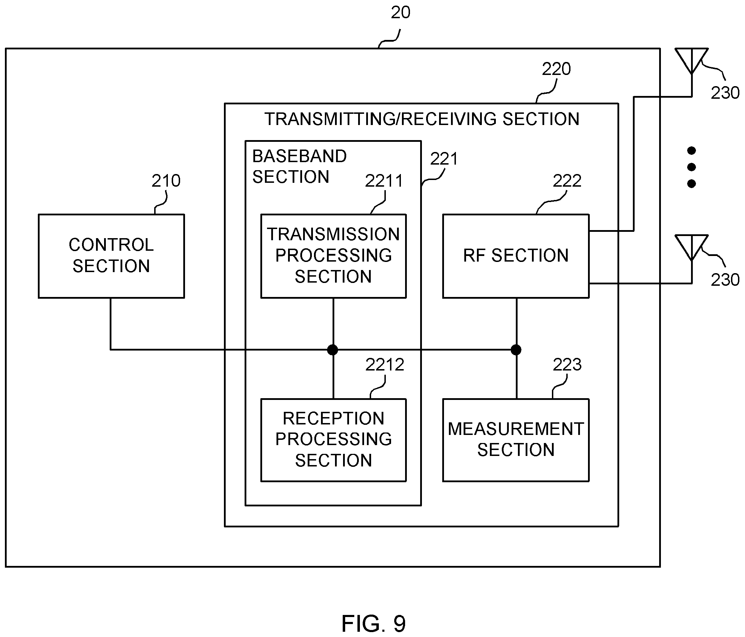

Fig. 9 is a diagram illustrating an example of a configuration of the user terminal according to an embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be included.

Note that, although this example mainly describes a functional block which is a characteristic part of the present embodiment, the user terminal 20 may be assumed also to have another functional block that is necessary for radio communication. A part of processing of each section described below may be omitted.

The control section 210 controls an entire user terminal 20. The control section 210 can include a controller, a control circuit, or the like, which is described on the basis of common recognition in a technical field according to the present disclosure.

The control section 210 may control signal generation, mapping, or the like. The control section 210 may control transmission/reception, measurement, and the like using the transmitting/receiving section 220 and the transmission/reception antenna 230. The control section 210 may generate data to be transmitted as a signal, control information, a sequence, or the like, and transfer the data, the control information, the sequence, or the like to the transmitting/receiving section 220.

The transmitting/receiving section 220 may include a baseband section 221, an RF section 222, or a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, or the like, which is described on the basis of common recognition in a technical field according to the present disclosure.

The transmitting/receiving section 220 may be constituted as an integrated transmitting/receiving section, or may be constituted by a transmitting section and a receiving section. The transmitting section may be configured by the transmission processing section 2211 and the RF section 222. The receiving section may include the reception processing section 2212, the RF section 222, or the measurement section 223.

The transmission/reception antenna 230 can include an antenna, for example, an array antenna, or the like, which is described on the basis of common recognition in a technical field according to the present disclosure.

The transmitting/receiving section 220 may receive the above-described downlink channel, synchronization signal, Downlink Reference Signal, or the like. The transmitting/receiving section 220 may transmit the above-described uplink channel, Uplink Reference Signal, or the like.

The transmitting/receiving section 220 may form at least either a transmission beam or a reception beam by using digital beam forming (for example, precoding), analog beam forming (for example, phase rotation), or the like.

On data, control information, or the like acquired from the control section 210 for example, the transmitting/receiving section 220 (transmission processing section 2211) may perform processing of a PDCP layer, processing of an RLC layer (for example, RLC retransmission control), processing of an MAC layer (for example, HARQ retransmission control), and may generate a bit string to be transmitted.

On the bit string to be transmitted, the transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion, and may output a baseband signal.

Note that whether or not to apply DFT processing may be determined on the basis of a configuration of transform precoding. In a case where transform precoding is enabled for a given channel (for example, PUSCH), the transmitting/receiving section 220 (transmission processing section 2211) may perform DFT processing as the above-described transmission processing in order to transmit the channel by using a DFT-s-OFDM waveform. In a case where transform precoding is not enabled for a given channel (for example, PUSCH), the transmitting/receiving section 220 (transmission processing section 2211) does not need to perform DFT processing as the above-described transmission processing.

The transmitting/receiving section 220 (RF section 222) may perform modulation to a radio frequency range, filtering processing, amplification, or the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, or the like on the signal in the radio frequency range received by the transmission/reception antenna 230.

To acquire user data, or the like, the transmitting/receiving section 220 (reception processing section 2212) may apply, to the acquired baseband signal, reception processing such as analog-digital conversion, FFT processing, IDFT processing (if necessary), filtering processing, demapping, demodulation, decoding (which may include error correcting decoding), MAC layer processing, processing of an RLC layer, processing of a PDCP layer, or the like.

The transmitting/receiving section 220 (measurement section 223) may perform measurement related to the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the transmitting section and the receiving section of the user terminal 20 in the present disclosure may include at least one of the transmitting/receiving section 220 and the transmission/reception antenna 230.

Note that the control section 210 may, in a case where transform precoding is configured enabled, mode 1 is configured, and a partial-and-non-coherent codebook subset is configured, determines, as a codebook subset of maximum rank 1 using four antenna ports, a codebook subset including a transmitted precoding matrix indicator (TPMI) with a value of 12 or more, on the basis of a specific higher layer parameter.

The transmitting/receiving section 220 may transmit the uplink shared channel (PUSCH) using (applying) a precoder included in the codebook subset including the TPMI with a value of 12 or more described above.

The control section 210 may determine the codebook subset including the TPMI with a value of 12 or more described above on the basis of a configured codebook type.

The control section 210 may determine the codebook subset including a TPMI with a value of 12 or more on the basis of the number of resource blocks or a subcarrier spacing for the uplink shared channel.

The control section 210 may determine the codebook subset including a TPMI with a value of 12 or more on the basis of the number of sounding reference signal (SRS) resources included in one or more SRS resource sets of which usage is a codebook.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) and using these apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

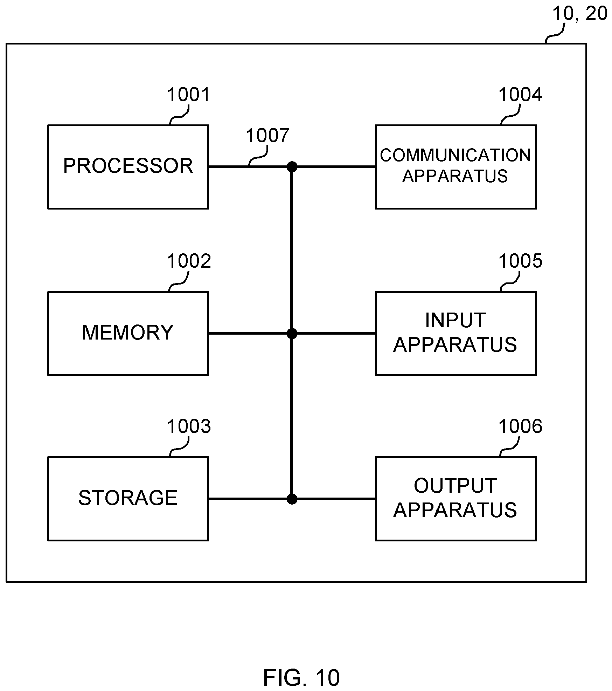

For example, the base station, the user terminal, or the like according to an embodiment of the present disclosure may function as a computer that executes processing a radio communication method in the present disclosure. Fig. 10 is a diagram illustrating an example of a hardware configuration of the base station and the user terminal according to an embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may include one or a plurality of apparatuses illustrated in the figure, or does not have to include some apparatuses.

For example, although only one processor 1001 is illustrated, a plurality of processors may be provided. Further, the processing may be executed by one processor, or the processing may be executed simultaneously, in sequence or using other different methods by two or more processors. Note that the processor 1001 may be implemented with one or more chips.

Each of functions of the base station 10 and the user terminal 20 is implemented by, for example, the processor 1001 executing an operation by reading given software (program) on hardware such as the processor 1001 or the memory 1002, controlling communication via the communication apparatus 1004, and controlling at least one of reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), or the like may be implemented by the processor 1001.

Furthermore, the processor 1001 reads programs (program codes), software modules, or data, from at least one of the storage 1003 and the communication apparatus 1004, into the memory 1002, and executes various processes according to these. As the program, a program to cause a computer to execute at least a part of the operation described in the above-described embodiment is used. For example, the control section 110 (210) may be implemented by a control program that is stored in the memory 1002 and operates in the processor 1001, and other functional blocks may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as "secondary storage apparatus."

The communication apparatus 1004 is hardware (transmission/reception device) for performing inter-computer communication through at least one of a wired network or a radio network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. In the transmitting/receiving section 120 (220), implementation may be made in which a transmitting section 120a (220a) and a receiving section 120b (220b) are separated from each other physically or logically.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, and the like). Note that the input apparatus 1005 and the output apparatus 1006 may be provided in an integrated structure (for example, a touch panel).

Furthermore, these pieces of apparatus, including the processor 1001, the memory 1002 and the like are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or plurality of periods (frames) included in the radio frame may be referred to as a subframe. Further, the subframe may include one or a plurality of slots in the time domain. A subframe may be a fixed time duration (for example, 1 ms) that is not dependent on numerology.

Here, the numerology may be a communication parameter applied to at least one of transmission or reception of a given signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and a specific windowing processing performed by the transceiver in the time domain.

A slot may include one or a plurality of symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or a plurality of symbols in the time domain. Further, the mini slot may be referred to as a sub slot. Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B."

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and the like, instead of a "subframe."

Here, a TTI refers to the minimum time unit of scheduling in radio communication, for example. For example, in the LTE system, a base station performs scheduling to allocate radio resources (a frequency bandwidth and transmit power that can be used in each user terminal and the like) to each user terminal in TTI units. Note that the definition of TTIs is not limited to this.

The TTI may be the transmission time unit of channel-encoded data packets (transport blocks), code blocks, codewords and the like, or may be the unit of processing in scheduling, link adaptation and the like. When TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Also, an RB may include one or more symbols in the time domain, and may be one slot, one mini slot, one subframe or one TTI in length. One TTI and one subframe each may be comprised of one or more resource blocks.

Note that one or a plurality of RBs may be referred to as a physical resource block (physical RB (PRB)), a subcarrier group (SCG), a resource element group (REG), a PRB pair, an RB pair, or the like.

Further, the resource block may include one or a plurality of resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for given numerology in a given carrier. Here, the common RB may be specified by the index of the RB based on a common reference point of the carrier. The PRB may be defined in a given BWP and be numbered within the BWP.

The BWP may include a BWP for UL (UL BWP) and a BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and so on described above are merely examples. For example, configurations such as the number of subframes included in the radio frame, the number of slots per subframe or radio frame, the number of mini slots included in the slot, the number of symbols and RBs included in the slot or mini slot, the number of subcarriers included in the RB, the number of symbols in the TTI, the symbol length, the cyclic prefix (CP) length, and the like can be variously changed.

Also, the information and parameters described in the present disclosure may be represented in absolute values or in relative values with respect to given values, or may be represented using other applicable information. For example, a radio resource may be specified by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and the like may be input and output via a plurality of network nodes.

The information, signals and the like that are input and/or output may be stored in a specific location (for example, in a memory), or may be managed in a control table. The information, signal, and the like to be input and output can be overwritten, updated or appended. The output information, signal, and the like may be deleted. The information, signals and the like that are input may be transmitted to other pieces of apparatus.

Notification of information may be performed not only by using the aspects/embodiments described in the present disclosure but also by using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, notification of the MAC signaling may be given by using, for example, a MAC control element (MAC control element (CE)).

Also, notification of given information (for example, notification of information to the effect that "X holds") does not necessarily have to be sent explicitly, and can be sent implicitly (for example, by not notifying this piece of information, by notifying another piece of information, and the like).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

Also, software, commands, information and so on may be transmitted and received via communication media. For example, in a case where software is transmitted from a website, a server, or another remote source by using at least one of a wired technology (coaxial cable, optical fiber cable, twisted-pair, digital subscriber line (DSL), or the like) or a radio technology (infrared rays, microwaves, or the like), at least one of the wired technology or the radio technology is included within a definition of the transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station or a base station subsystem that provide a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be referred to as a transmission apparatus, a reception apparatus, a radio communication apparatus, or the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Similarly, the user terminal in the present disclosure may be replaced with the base station. In this case, the base station 10 may have the function of the user terminal 20 described above.

In the present disclosure, the operation performed by the base station may be performed by an upper node thereof in some cases. In a network including one or a plurality of network nodes including the base station, it is clear that various operations performed for communication with the terminal can be performed by the base station, one or more network nodes (for example, a mobility management entity (MME), a serving-gateway (S-GW), and the like are conceivable, but not limited thereto) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), Global System for Mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), or another appropriate radio communication method, a next generation system extended on the basis of these, and the like. Further, a plurality of systems may be combined (for example, a combination of LTE or LTE-A and 5G) and applied.

The phrase "based on/on the basis of" as used in the present disclosure does not mean "based only on/on the basis only of", unless otherwise specified. In other words, the phrase "based on/on the basis of" means both "based only on/on the basis only of" and "based at least on/on the basis at least of."

Reference to elements with designations such as "first," "second" and the like as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, or the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and the like.

In addition, to "judge" and "determine" as used herein may be interpreted to mean making judgements and determinations related to resolving, selecting, choosing, establishing, comparing and the like. In other words, to "judge" and "determine" as used herein may be interpreted to mean making judgements and determinations related to some operation.

In addition, to "judge" and "determine" as used herein may be replaced with "assuming", "expecting", "considering" and the like.

The term "maximum transmit power" described in the present disclosure may mean the maximum value of transmit power, the nominal UE maximum transmit power, or the rated UE maximum transmit power.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the description may mean that "A and B are different from C". Terms such as "leave", "coupled", or the like may also be interpreted in the same manner as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a control section that, in a case where transform precoding is configured enabled, mode 1 is configured, and a partial-and-non-coherent codebook subset is configured, determines, as a codebook subset of maximum rank 1 using four antenna ports, a codebook subset including a transmitted precoding matrix indicator (TPMI) with a value of 12 or more, on the basis of a specific higher layer parameter; and
a transmitting section that transmits an uplink shared channel by using a precoder included in the codebook subset including a TPMI with the value of 12 or more.

2. The terminal according to claim 1, wherein the control section determines the codebook subset including a TPMI with the value of 12 or more on the basis of a configured codebook type.

3. The terminal according to claim 1, wherein the control section determines the codebook subset including a TPMI with the value of 12 or more on the basis of the number of resource blocks or a subcarrier spacing for the uplink shared channel.

4. The terminal according to claim 1, wherein the control section determines the codebook subset including a TPMI with the value of 12 or more on the basis of the number of sounding reference signal (SRS) resources included in one or more SRS resource sets of which usage is a codebook.

5. A radio communication method for a terminal, the method comprising:
a step of, in a case where transform precoding is configured enabled, mode 1 is configured, and a partial-and-non-coherent codebook subset is configured, determining, as a codebook subset of maximum rank 1 using four antenna ports, a codebook subset including a transmitted precoding matrix indicator (TPMI) with a value of 12 or more, on the basis of a specific higher layer parameter; and
a step of transmitting an uplink shared channel by using a precoder included in the codebook subset including a TPMI with the value of 12 or more.
